# EUROPEAN PATENT APPLICATION

(11) **EP 2 306 711 A2**
(43) Date of publication of application: **06.04.2011**
(21) Application number: 10178700.0
(22) Date of filing: 23.09.2010
(51) Int. Cl.: H04N 5/44, H04N 5/445

(54) **Remote operation device, remote operation system, remote operation method and program**

(30) Priority: 30.09.2009 JP 2009227756
(71) Applicant: Sony Corporation, Tokyo 108-0075 (JP)
(72) Inventor: Yamada, Eiju, Tokyo 108-0075 (JP); Ohashi, Yoshinori, Tokyo 108-0075 (JP); Kinoshita, Akihiko, Tokyo 108-0075 (JP)
(74) Representative: Beder, Jens

(57) **Abstract**

A remote operation device is provided which includes a display panel for displaying an object, a housing formed along an outer edge of the display panel, a detection unit for detecting a selection operation on the object on the display panel, a remote operation unit for remotely operating an electronic device according to the detected selection operation, and a display control unit for displaying on the display panel the object near a characteristic area of the housing identifiable by touch.

## Description

### BACKGROUND OF THE INVENTION

### Field of the Invention

The present invention relates to a remote operation device, a remote operation system, a remote operation method and a program.

### Description of the Related Art

There has been known a remote controller equipped with a touch panel display as a remote operation device (also referred to as "remote controller" hereinafter) for remotely operating an electronic device.

In this type of remote controller, there is displayed on the touch panel display an operation screen on which GUI objects such as icons to each of which processing of an electronic device is assigned are arranged. Then, when an object is manipulated on the operation screen, the electronic device is remotely operated by an operation command which the remote controller transmits according to the manipulation.

By the way, in this type of remote controller, the location of the object is difficult to be identified by touch on the remote controller (on the operation screen), different from a hardware button operating type remote controller. Consequently, even in the case of recognizing the location of the object to some extent, the user usually manipulates the object after once visually confirming the location of the object in order to prevent an erroneous manipulation.

### SUMMARY OF THE INVENTION

As a result, since the user has to visually confirm the object location at the time of manipulating an object, the user may feel inconvenient in operating the remote controller. In particular, at the time of remotely operating a display device such as a television, the user has to visually confirming an object location even if the user wants to look at the display screen, so that the user may feel troublesome in operating the remote controller.

In light of the foregoing, it is desirable to provide a remote operation device, a remote operation system, a remote operation method and a program, capable of manipulating an object without visual confirmation of the object location.

According to a first embodiment of the present invention, there is provided a remote operation device including a display panel for displaying an object, a housing formed along an outer edge of the display panel, a detection unit for detecting a selection operation on the object on the display panel, a remote operation unit for remotely operating an electronic device according to the detected selection operation, and a display control unit for displaying on the display panel the object near a characteristic area of the housing identifiable by touch.

According to such configuration, the object is displayed, on the display panel, near the characteristic area of the housing formed along the outer edge of the display panel, the characteristic area being identifiable by touch. This enables the user to manipulate the object without visually performing the object location, by specifying the location of the object according to the feel obtained from the characteristic area of the housing.

Moreover, the housing may be formed so as to surround the display panel formed in a polygonal shape, and the characteristic area of the housing may correspond to a corner and/or an edge of the housing. Moreover, the housing may be formed along the outer edge of the display panel, and the characteristic area of the housing may correspond to an uneven part provided on the housing or an uneven part provided at a connection part with the display panel.

Moreover, the display control unit may cause the display panel to display the object in a manner that the object is displayed near the characteristic area of the housing identifiable by touch, according to an operated state of the remote operation device.

Moreover, the detection unit may detect a predetermined gesture operation on the display panel, and the remote operation unit may remotely operate the electronic device according to the detected gesture operation.

The remote operation unit may remotely operate the electronic device which is a display device.

According to a second embodiment of the present invention, there is provided a remote operation system including the remote operation device and an electronic device remotely operated by the remote operation device.

According to a third embodiment of the present invention, there is provided a remote operation method including the steps of displaying on a display panel an object near a characteristic area of a housing formed along an outer edge of the display panel, the characteristic area being identifiable by touch, and remotely operating an electronic device according to a selection operation on the object detected on the display panel.

According to a fourth embodiment of the present invention, there is provided a program for causing a computer to execute the remote operation method. Here, the program may be provided by using a computer-readable recording medium or may be provided via a communication means.

According to the embodiments of the present invention described above, there can be provided the remote operation device, the remote operation system, the remote operation method and the program, capable of manipulating an object without visual confirmation of the object location.

### BRIEF DESCRIPTION OF THE DRAWINGS

FIG. 1 is a diagram showing a remote control system according to an embodiment of the present invention;
FIG. 2 is a block diagram showing a main functional configuration of the remote controller system;
FIG. 3 is a flow diagram showing an operation of a remote controller;
FIG. 4 is a diagram showing an operation screen for selection operation by touch;
FIG. 5A is a diagram showing a method of a selection operation by touch (at the time of both-hands operation);
FIG. 5B is a diagram showing a method of the selection operation by touch (at the time of one-hand operation);
FIG. 6 an example of an operation screen for gesture operation;
FIG. 7A is a diagram showing a method of a gesture operation (at the time of flick operation);
FIG. 7B is a diagram showing a method of the gesture operation (at the time of press operation); and
FIG. 7C is a diagram showing a method of the gesture operation (at the time of hold operation).

### DETAILED DESCRIPTION OF THE EMBODIMENT

Hereinafter, preferred embodiments of the present invention will be described in detail with reference to the appended drawings. Note that, in this specification and the appended drawings, structural elements that have substantially the same function and structure are denoted with the same reference numerals, and repeated explanation of these structural elements is omitted.

### [Remote controller system]

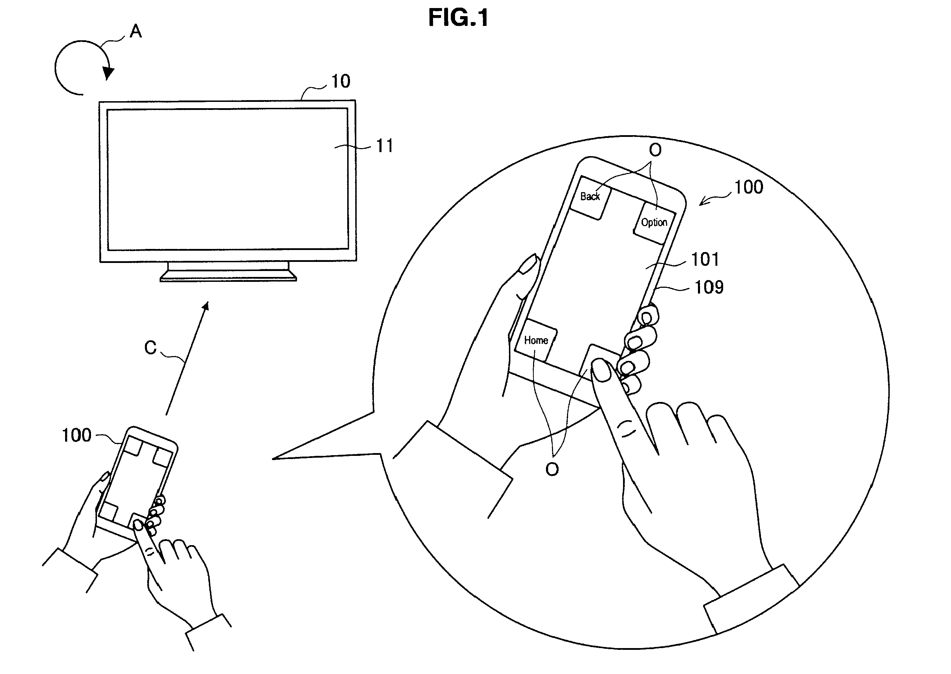

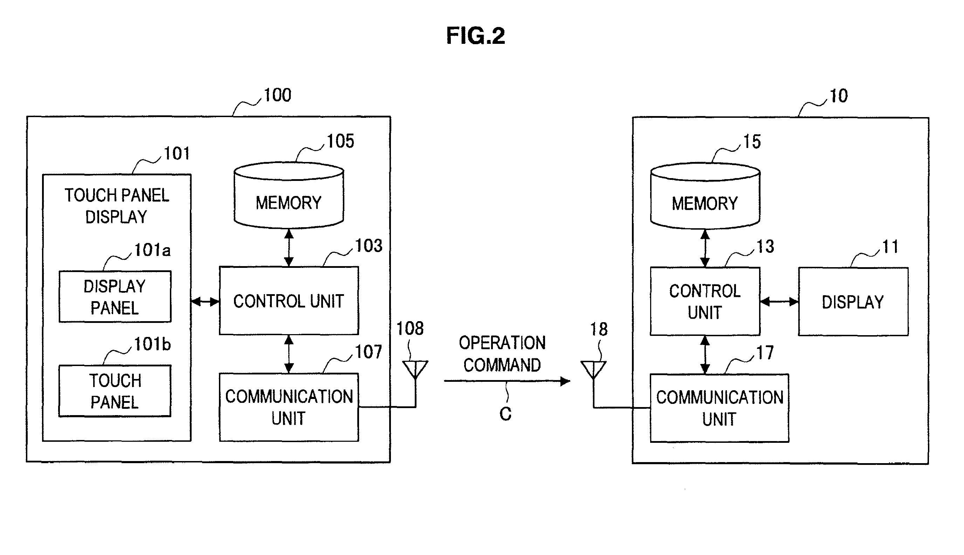

In the following, a remote controller system according to an embodiment of the present invention will be described with reference to FIG. 1 and FIG. 2. FIG. 1 is a diagram showing an outline of the remote controller system according to the embodiment of the present invention. FIG. 2 is a block diagram showing a main functional configuration of the remote controller system.

As shown in FIG. 1, the remote controller system includes a remote controller 100 equipped with a touch panel display 101 and an electronic device remotely operated via the remote controller 100. In addition, FIG. 1 shows a television 10 as an example of the electronic device 10.

In the remote controller system, communication is performed with wire or wirelessly at least in the direction from the remote controller 100 to the television 10. In addition, the communication between the remote controller 100 and the television 10 may be performed directly or indirectly via, for example, a network (not shown).

The remote controller 100 displays on the touch panel display 101 an operation screen for operating the television 10. Objects O to each of which processing A of the television 10 is assigned are arranged. Then, when a user manipulates an object O on the operation screen, the remote controller 100 transmits to the television 10 an operation command C corresponding to the manipulated object O. When having received the operation command C, the television 10 executes processing A corresponding to the operation command C.

Here, in the remote controller 100, a housing 109 is formed along the outer edge of the touch panel display 101. Moreover, on the touch panel display 101, the objects O are displayed near characteristic areas of the housing 109 that are identifiable by touch. The characteristic areas of the housing 109 are structural characteristic areas by which positions on the remote controller can be identified according to the feel of a finger or the like (operation tool), and which refer to corners, the edge, and uneven part of the housing 109, for example.

This enables the user to manipulate an object O without visually confirming the object location by identifying the location of the object O according to the feel obtained from the characteristic area of the housing 109.

FIG. 2 shows functional configurations of the remote controller 100 and the television 10. The remote controller includes the touch panel display 101, a control unit 103, a memory 105, and a communication unit 107. The television 10 includes a display 11, a control unit 13, a memory 15, and a communication unit 17. In addition, FIG. 2 only shows the main functional configuration according to the embodiment of the present invention.

First, the functional configuration of the remote controller 100 will be described. The touch panel display 101 has a configuration in which a touch panel 101b (a detection unit) is stacked on a display panel 101a. As the display panel 101a, a liquid crystal display (LCD) is used, for example. As the touch panel 101b, a resistive, capacitive, ultrasonic, or infrared touch panel is used, for example.

The display panel 101a displays an operation screen, for example. The touch panel 101b detects an operation input by a user's finger or the like performed on the panel. The touch panel 101b generates a contact signal in response to contact of the finger or the like on the on the panel. Moreover, the touch panel 101b generates a position signal indicating the position of the finger or the like in contact with the panel.

The control unit 103 includes a CPU, a RAM, and a ROM, for example, and the CPU uses the RAM as a working memory, executes a program stored in the ROM, and controls each unit of the remote controller 100. The program functions as a remote operation unit for remotely operating the television 10 and as a display control unit for controlling display of the display panel 101a, for example.

The memory 105 is a nonvolatile memory such as an EEPROM, which stores therein operation screen information, operation command information, and data of the objects O, for example. The operation screen information is information for creating an operation screen used for causing the television 10 to execute each processing A. The operation command information is information for creating an operation command C for causing the television 10 to execute each processing A.

The communication unit 107 transmits at least an operation command C to the television 10 via an antenna 108. In addition, other than the transmission of the operation command C, the communication unit 107 can receive from the television 10 the operation screen information corresponding to the television 10, the operation command information, status information indicating the status of the television 10, for example. The communication unit 107 performs bidirectional wireless communication with the communication unit 17 of the television 10 through the same communication system. The physical layer of IEEE 802. 15. 4 is used in the communication system, for example.

The control unit 107 determines a variety of operation input such as a pointing operation, a flick operation, a drag operation, a press operation, and a hold operation, according to contact state of the finger or the like detected by the touch panel 101b.

Here, the pointing operation is an operation of touching the touch panel 101b with the finger or the like, the flick operation is an operation of flicking the touch panel 101b with the finger or the like, and the drag operation is an operation of moving the finger or the like on the touch panel 101b. The press operation is an operation of pressing the touch panel 101b with the finger or the like, and the hold operation is an operation of covering the touch panel 101b with a palm, a plurality of fingers or the like with a predetermined area.

Determination of an operation input among the pointing operation, the flick operation, and the drag operation is made based on contact/noncontact and a contact position of the finger on the touch panel 101b. Moreover, determination between the press operation and the hold operation is made based on contact pressure and a contact area (or proximity area) of the finger or the like on the touch panel 101b.

The control unit 103 controls the display panel 101a to display an operation screen based on the operation screen information. Here, the control unit 103 controls the display panel 101a to display the objects O near the characteristic areas of the housing 109.

When the user manipulates a desired object O on the operation screen, the control unit 103 controls the communication unit 107 to transmit an operation command C corresponding to the manipulated object O to the television 10, based on the operation command information.

Next, the functional configuration of the television 10 will be described. The display 11 displays an operation screen and content, for example. The control unit 13 includes a CPU, a RAM, and a ROM, for example, and controls each unit of the television 10. The memory 15 is a nonvolatile memory such as an EEPROM, which stores therein operation screen information and operation command information, for example.

The communication unit 17 receives the operation command C from the remote controller 100 via an antenna 18. In addition, other than the reception of the operation command C, the communication unit 17 can transmit to the remote controller 100 the operation screen information corresponding to the television 10, the operation command information, the status information indicating the status of the television 10, for example.

When having received the operation command C from the remote controller 100, the control unit 13 controls each unit to execute processing A corresponding to the received operation command C, based on the operation command information.

### [2. Operation of remote controller system]

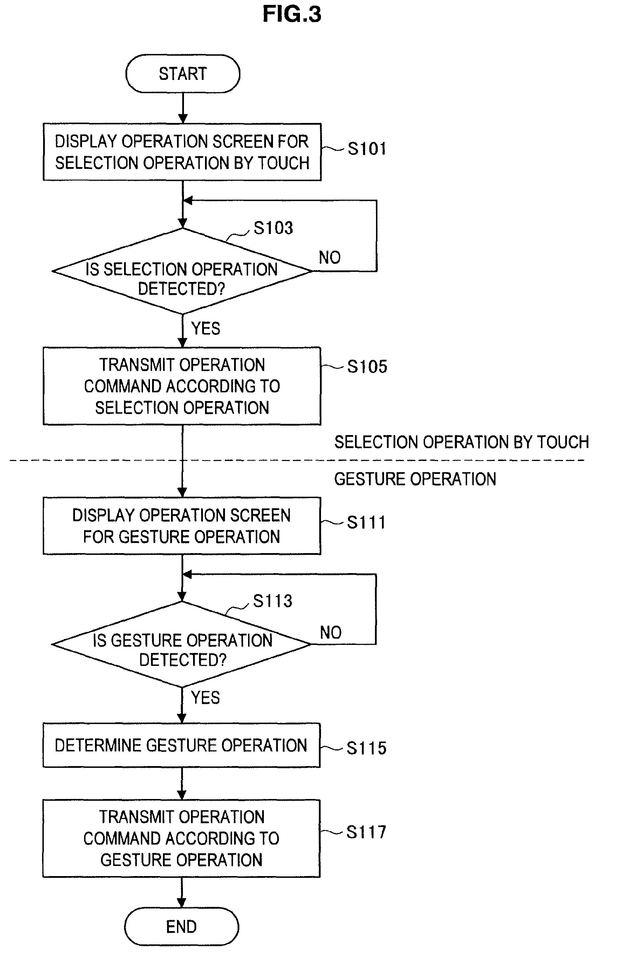

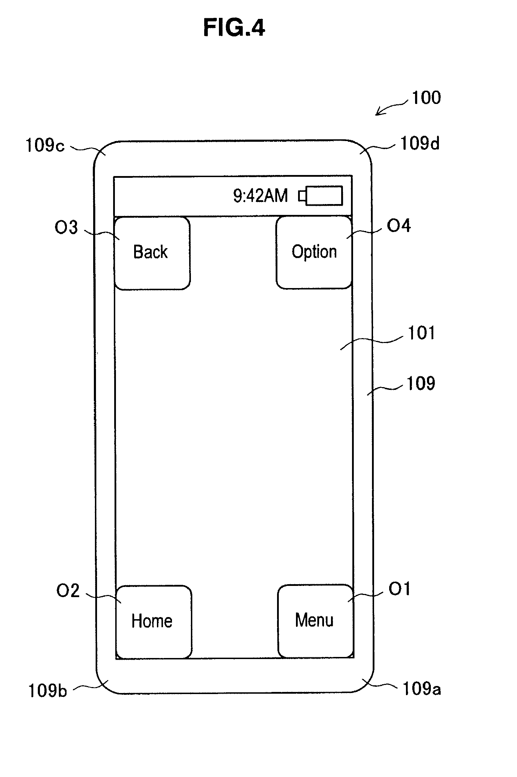

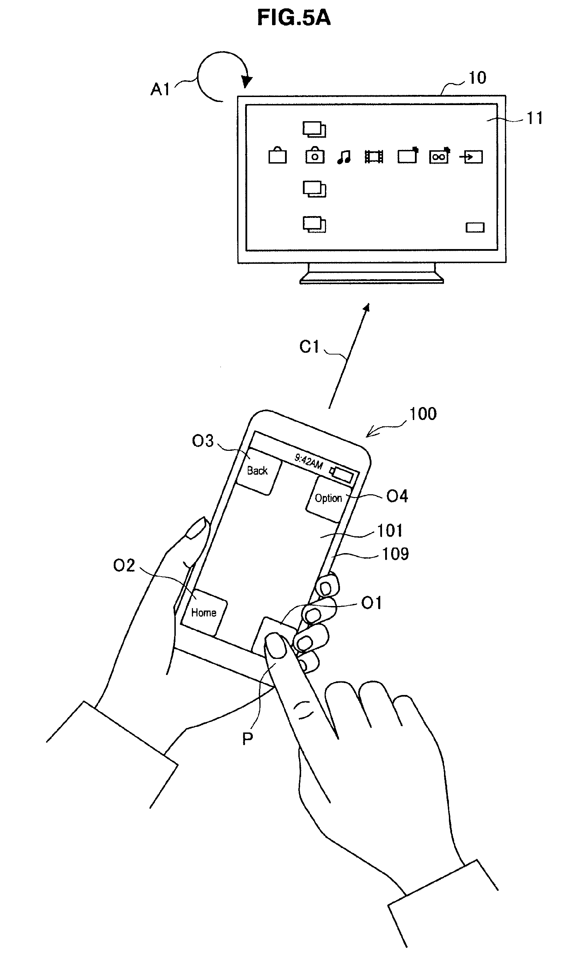

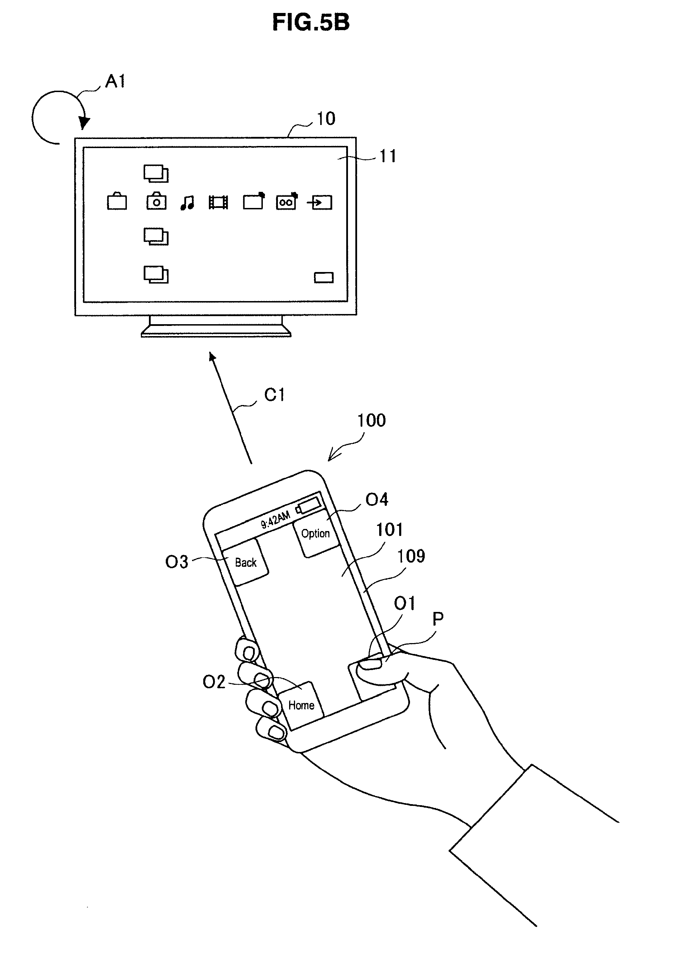

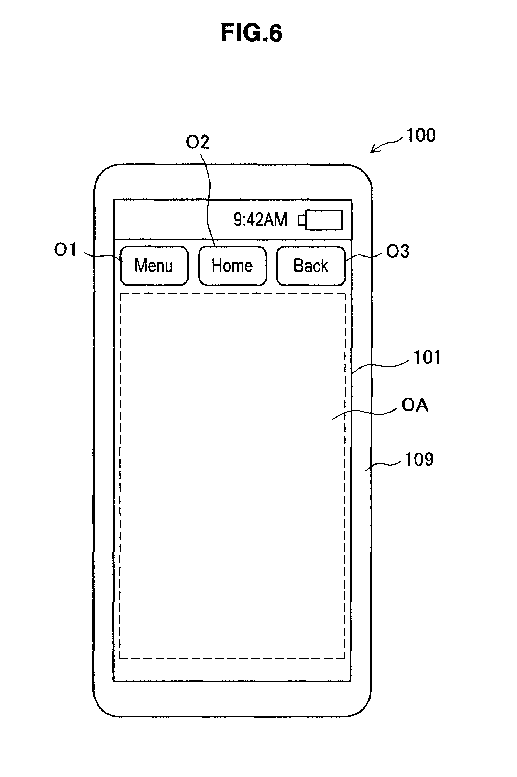

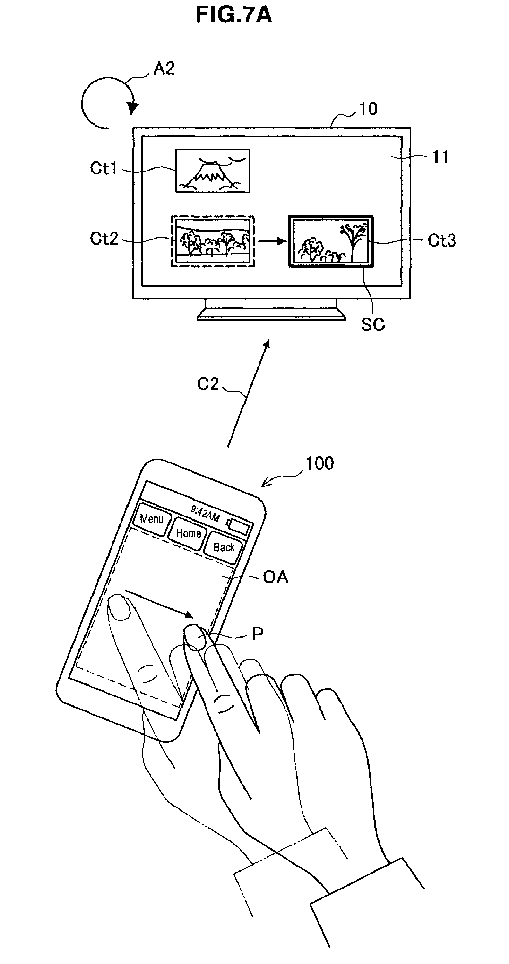

In the following, an operation of the remote controller system according to the embodiment of the present invention will be described with reference to FIG. 3 to FIG. 7. FIG. 3 is a flow diagram showing an operation of the remote controller 100. FIG. 4 and FIGS. 5A and 5B are diagrams showing an example of an operation screen for selection operation and a method of a selection operation, respectively. FIG. 6 and FIGS. 7A to 7C are diagrams showing an example of an operation screen for gesture operation and a method of a gesture operation, respectively.

FIG. 3 shows an operation procedure of the remote controller 100 at the time of selection operation by touch and at the time of gesture operation. In addition, in FIG. 3, the gesture operation is shown below the selection operation by touch, but the operations may be performed in the reverse order, or either of the operations may be performed.

In the following, there will be described a case where basically a user holds the remote controller 100 with a non-dominant hand (left hand) and operates the remote controller 100 with the forefinger P of the dominant hand (right hand). In addition, also a case of operating the remote controller 100 with a finger other than the forefinger P will be described in the same manner.

### (2-1. Selection operation by touch)

First, the selection operation by touch will be described. As shown in FIG. 3, the control unit 103 controls the display panel 101a to display the operation screen for selection operation by touch (Step S101). Here, the objects O are desirably displayed in a relatively large size compared to the size at the time of selection operation with visual confirmation in order to improve the operability of the remote controller 100.

FIG. 4 shows an example of the operation screen. On each of the lower right, lower left, upper left and upper right corners of the operation screen, each of the objects O1, 02, 03, and 04, which are "Menu", "Home", "Back", and "Option" are manipulated for causing an operation screen for menu, an operation screen for start-up, an immediately preceding screen, and an operation screen for initial setting to be displayed on the television 10.

Each of the objects 01, 02, 03, and 04 are arranged near each of the lower right, lower left, upper left and upper right corners 109a, 109b, 109c, and 109d of the housing 109. That is, the objects O1 to 04 are arranged near the characteristic areas 109a to 109d of the housing 109 which are identifiable by touch.

When an operation screen is displayed, the control unit 103 determines whether a selection operation by the user is detected (S103). The user performs the selection operation by touch in order to select a desired object O on the operation screen. In the following, a case where the user recognizes the arrangement of the objects 01 to 04 to some extent is assumed.

FIG. 5A shows a case of performing a selection operation by touch with both hands. In the example shown in FIG. 5A, the selection operation on the "Menu" object O1 located on the lower right corner of the operation screen is performed. Here, the "Menu" object O1 is located near the lower right corner 109a of the housing 109.

The user can identify the location of the "Menu" object O1 adjacent to the lower right corner 109a of the housing 109 by touching the lower right corner 109a of the housing 109 with the forefinger P. Here, at the time of identifying the object location, it is also important to grasp the orientation of the housing 109 according to the feel of the left hand holding the housing 109. This enables the user to select the desired object while looking at the display screen of the television 10 without visually confirming the object location.

Here, if the user recognizes the distance between the lower right corner 109a of the housing 109 and the lower right corner of the operation screen to some extent, the user can directly move the forefinger P to the lower right corner of the operation screen by a pointing operation. Moreover, if the user does not recognize the distance between the lower right corner 109a of the housing 109 and the lower right corner of the operation screen, the user may directly move the forefinger P toward the center of the display panel 101a by a drag operation.

In the same manner, in the case of performing a selection operation on the "Home" object 02, the user can identify the location of the "Home" object 02 adjacent to the lower left corner 109b of the housing 109 by touching the lower left corner 109b of the housing 109 with the forefinger P.

Moreover, in the case of performing a selection operation on the "Back" object 03, the user can identify the location of the "Back" object 03 adjacent to the upper left corner 109c of the housing 109 by touching the upper left corner 109c of the housing 109 with the forefinger P. In the same manner, in the case of performing a selection operation on the "Option" object 04, the user can identify the location of the "Option" object 04 adjacent to the upper right corner 109d of the housing 109 by touching the upper right corner 109d of the housing 109 with the forefinger P.

FIG. 5B shows a case of performing a selection operation by touch with one hand. In the example shown in FIG. 5B, the user holds the remote controller 100 with a dominant hand (right hand) and operates the remote controller 100 with the thumb P of the dominant hand. Also in the example shown in FIG. 5B, the selection operation on the "Menu" object O1 located on the lower right corner of the operation screen is performed.

The user can identify the location of the "Menu" object O1 adjacent to the lower right corner 109a of the housing 109 by touching the lower right corner 109a of the housing 109 with the thumb P. Here, at the time of identifying the object location, it is also important to grasp the orientation of the housing 109 according to the feel of the fingers holding the housing 109. This enables the user to select the desired object while looking at the display screen of the television 10 without visually confirming the object location.

When the selection operation is detected, the control unit 103 controls the communication unit 107 to transmit to the television 10 an operation command C corresponding to the selected object O, based on the operation command information (S105). Then, when having received the operation command C via the communication unit 17, the control unit 13 of the television 10 executes processing A corresponding to the operation command C based on the operation command information.

For example, in the example described above, in response to the selection operation on the "Menu" object O1, the control unit 103 controls the communication unit 107 to transmit to the television 10 the operation command C1 for executing the display processing A1 of the operation screen for menu. When having received the operation command C1, the control unit 13 of the television 10 executes the display processing A1 of the operation screen for menu and controls the display 11 to display the operation screen for menu.

In the above description, there has been described the case where the objects O are arranged near the corners 109a to 109d of the housing 109. However, the objects O may be arranged near the sides (edge) of the housing 109. Moreover, uneven parts may be provided on the housing 109 or at the connection part between the housing 109 and the display panel 101a, for example, and the objects O may be arranged near the uneven parts.

Moreover, in FIG. 5B, there has been described the case where the objects O are arranged near each of the lower right, lower left, upper left and upper right corners 109a to 109d of the housing 109. However, in the case where the remote controller 100 is operated with one hand, the objects O may be arranged adjacent only to the lower right and lower left corners 109a and 109b of the housing 109 after determination of the operating state of the controller 100, in order to improve the operability of the remote controller 100.

### (Gesture operation)

Next, the gesture operation will be described. As shown in FIG. 3, the control unit 103 controls the display panel 101a to display the operation screen for gesture operation (S111). Here, an object O to be operated does not have to be displayed on the display screen.

FIG. 6 shows an example of the operation screen. On the upper part of the operation screen, each of the "Menu" "Home" and "Back" objects O1, 02, and 03 is arranged. The description of each of the "Menu" "Home" and "Back" objects O1, 02, and 03 is the same as given in FIG. 4.

Moreover, in the central part of the operation screen, an operation area OA for performing a gesture operation is located. In the operation area OA, a gesture operation such as a pointing operation, a flick operation, a drag operation, a press operation, and a hold operation is performed by a user.

When the operation screen is displayed, the control unit 103 determines whether a gesture operation by a user is detected (S113). The user performs a predetermined gesture operation on the operation screen for specifying processing A to be executed by the television 10. Here, since the execution of the processing A is specified by the predetermined gesture operation instead of the selection operation on an object O, the user does not have to visually confirm the object location.

When the gesture operation is detected, the control unit 103 determines which one of the pointing operation, the flick operation, the drag operation, the press operation, the hold operation and the like has been performed, for example (S115).

When the gesture operation is determined, the control unit 103 controls the communication unit 107 to transmit to the television 10 an operation command C corresponding to the determined gesture operation, based on the operation command information (S 117). Then, when having received the operation command C via the communication unit 17, the control unit 13 of the television 10 executes processing A corresponding to the operation command C based on the operation command information.

FIGS. 7A to 7C show cases of performing a variety of gesture operations. The examples shown in FIG. 7A to 7C assume cases of selecting content Ct on a content selection screen displayed on the display 11 by using a selection cursor SC.

In FIG. 7A, a rightward flick operation is performed on the operation area OA. In this case, in response to the rightward flick operation, an operation command C2 for executing processing A2 of moving a focus rightward is transmitted to the television 10. In response to the operation command C2, the television 10 executes the processing A2 of moving the focus rightward and updates the display of the selection screen. In FIG. 7A, the selection cursor SC is moved from the content Ct2 to the content Ct3. This enables the user to specify the execution of the desired processing A while looking at the display screen of the television 10 without visually confirming an object location.

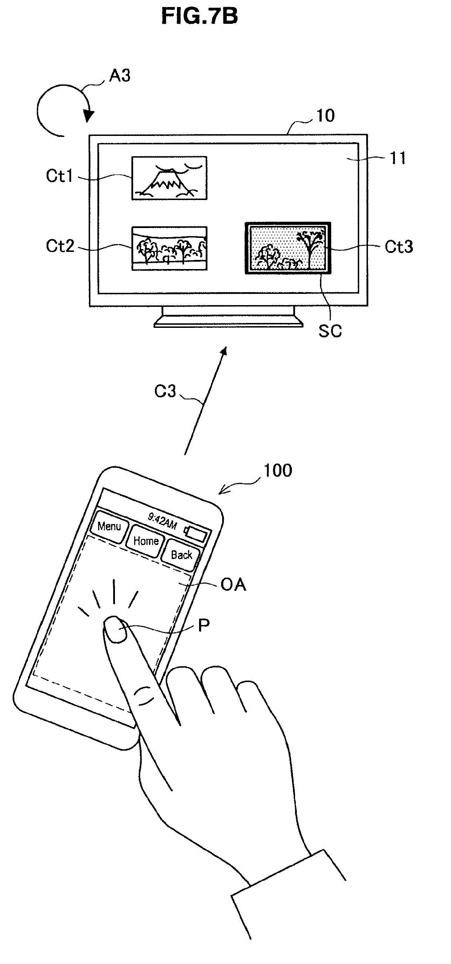

In FIG. 7B, a press operation is performed on the operation area OA. In this case, in response to the press operation, an operation command C3 for executing processing A3 of selecting content is transmitted to the television 10. In response to the operation command C3, the television 10 executes the processing A3 of selecting content and updates the display of the selection screen. In FIG. 7B, the content Ct3 is selected and the display of the content Ct3 is changed.

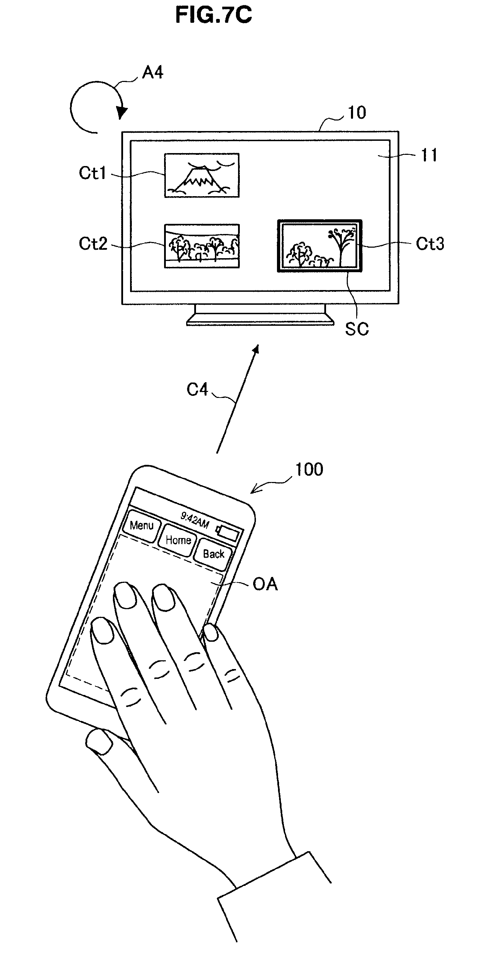

In FIG. 7C, a hold operation is performed on the operation area OA. In this case, in response to the hold operation, an operation command C4 for executing processing A4 of cancelling the content selection is transmitted to the television 10. In response to the operation command C4, the television 10 executes the processing A4 of cancelling the content selection and updates the display of the selection screen. In FIG. 7C, the selection of the content Ct3 is cancelled and the display of the content Ct3 is changed.

In the above description, there has been described the case of holding the remote controller 100 with a non-dominant hand (left hand) and operates the remote controller 100 with the forefinger P of the dominant hand (right hand). However, also the case where the user holds the remote controller 100 with a dominant hand (right hand) and operates the remote controller 100 with the thumb or the like of the dominant hand (right hand) can be explained in the same manner.

### [3. Summary]

According to the embodiment described above, the objects O are displayed on the display panel 101a near the characteristic areas of the housing 109 formed along the outer edge of the display panel 101a, which are identifiable by touch. This enables the user to operate an object O without visually confirming the object location, by identifying the location of the object O according to the feel obtained from the characteristic area of the housing 109. Moreover, the user can specify processing A to be executed by the television 10 without visually confirming an object location, by performing a predetermined gesture operation.

Although the preferred embodiments of the present invention have been described in the foregoing with reference to the drawings, the present invention is not limited thereto. It should be understood by those skilled in the art that various modifications, combinations, sub-combinations and alterations may occur depending on design requirements and other factors insofar as they are within the scope of the appended claims or the equivalents thereof.

For example, in the description of the above embodiment, the case where the housing 109 of the remote controller 100 is formed in a substantially rectangular shape has been described. However, the housing of the remote controller 100 may be formed in a polygonal shape other than the rectangular shape. In this case, corners and edges of the housing can be characteristic areas. Moreover, the housing of the remote controller 100 may be formed in a curved shape other than the polygonal shape. In this case, uneven parts provided on the housing or at the connection part between the housing and the display panel can be characteristic areas.

Moreover, in the description of the above embodiment, the case of remotely operating the television 10 as the electronic device has been described. However, a display device other than the television 10 and, furthermore, a variety of devices other than the display device may be remotely operated as the electronic device.

The present application contains subject matter related to that disclosed in Japanese Priority Patent Application JP 2009-227756 filed in the Japan Patent Office on September 30, 2009, the entire content of which is hereby incorporated by reference.

## Claims

1. A remote operation device comprising:
a display panel for displaying an object;
a housing formed along an outer edge of the display panel;
a detection unit for detecting a selection operation on the object on the display panel;
a remote operation unit for remotely operating an electronic device according to the detected selection operation; and
a display control unit for displaying on the display panel the object near a characteristic area of the housing identifiable by touch.

2. The remote operation device according to claim 1,
wherein the housing is formed so as to surround the display panel formed in a polygonal shape, and
wherein the characteristic area of the housing corresponds to a corner and/or an edge of the housing.

3. The remote operation device according to claim 1 or 2,
wherein the housing is formed along the outer edge of the display panel, and
wherein the characteristic area of the housing corresponds to an uneven part provided on the housing or an uneven part provided at a connection part with the display panel.

4. The remote operation device according to any one of claims 1 to 3,
wherein the display control unit causes the display panel to display the object in a manner that the object is displayed near the characteristic area of the housing identifiable by touch, according to an operated state of the remote operation device.

5. The remote operation device according to any one of claims 1 to 4,
wherein the detection unit detects a predetermined gesture operation on the display panel, and
wherein the remote operation unit remotely operates the electronic device according to the detected gesture operation.

6. The remote operation device according to any one of claims 1 to 5,
wherein the remote operation unit remotely operates the electronic device which is a display device.

7. A remote operation system comprising:
a remote operation device; and
an electronic device which is remotely operated by the remote operation device,
wherein the remote operation device includes
a display device for displaying an object,
a housing formed along an outer edge of the display panel,
a detection unit for detecting a selection operation on the object on the display panel,
a remote operation unit for remotely operating the electronic device according to the detected selection operation, and
a display control unit for displaying on the display panel the object near a characteristic area of the housing identifiable by touch.

8. A remote operation method comprising the steps of:
displaying on a display panel an object near a characteristic area of a housing formed along an outer edge of the display panel, the characteristic area being identifiable by touch; and
remotely operating an electronic device according to a selection operation on the object detected on the display panel.

9. A program for causing a computer to execute a remote operation method, the method comprising the steps of:
displaying on a display panel an object near a characteristic area of a housing formed along an outer edge of the display panel, the characteristic area being identifiable by touch; and
remotely operating an electronic device according to a selection operation on the object detected on the display panel.
